# NEUE EUROPÄISCHE PATENTSCHRIFT

(11) **EP 2 631 204 B2**
(45) Veröffentlichungstag und Bekanntmachung des Hinweises auf die Entscheidung über den Einspruch: **23.05.2018**
(45) Hinweis auf die Patenterteilung: 14.01.2015
(21) Anmeldenummer: 13000527.5
(22) Anmeldetag: 01.02.2013
(51) Int. Cl.: B65G 47/08, B65G 47/31, B65G 43/10

(54) **Zuführvorrichtung zum Transport von Produkten**
Supply apparatus for conveying products
Dispositif d'amenée pour le transport de produits

(30) Priorität: 22.02.2012 DE 102012003500
(43) Veröffentlichungstag der Anmeldung: 28.08.2013
(73) Patentinhaber: MULTIVAC Sepp Haggenmüller SE & Co. KG, 87787 Wolfertschwenden (DE)
(72) Erfinder: Wörz, Norbert, 87746 Erkheim (DE)
(74) Vertreter: Grünecker Patent- und Rechtsanwälte PartG mbB

(56) Entgegenhaltungen:
- EP-A2- 0 385 245
- WO-A1-2008//034482
- DE-A1- 4 002 724
- US-A- 4 518 075
- US-A- 5 547 004
- US-B2- 8 011 495

## Beschreibung

Die vorliegende Erfindung betrifft eine Zuführvorrichtung mit den technischen Merkmalen des Anspruchs 1 sowie ein Verfahren mit den technischen Merkmalen des Anspruchs 10.

In der Praxis, insbesondere in der Lebensmittelindustrie, kommen Zuführvorrichtungen in Pickerstraßen zum Einsatz. Dabei umfasst die Zuführvorrichtung ein Förderband, welches funktionell zwischen einer Aufschneidvorrichtung und einem Picker angeordnet ist. Von der Aufschneidvorrichtung kann ein aufgeschnittenes Produkt dem Förderband der Zuführvorrichtung übergeben werden, welches das Produkt zum Picker transportiert. Dieser übernimmt und überführt das Produkt in eine nachgelagerte Verpackungsmaschine.

Durch die Aufschneidvorrichtung kann beispielsweise Käse, Wurst oder Fleisch aufgeschnitten werden. Die aus einem Laib Käse, einem Kaliber Wurst oder einer Portion Fleisch hergestellten Scheiben werden als Gruppe von beispielsweise zehn Scheiben an das Förderband der Zuführvorrichtung übergeben. Die Scheiben der Gruppe werden dabei hintereinander in kurzem Abstand zueinander durch die Zuführvorrichtung von der Aufschneidvorrichtung abtransportiert.

Problematisch ist, dass der Zuführvorrichtung im Anschluß an eine Gruppe von Produkten für eine gewisse Zeit nichts mehr übergeben wird, weil in die Aufschneidvorrichtung zuerst ein neuer Kaliber Käse, Wurst, Fleisch oder Ähnliches zum Aufschneiden eingelegt werden muss.

In Folge dessen kann der Picker von der Zuführvorrichtung lediglich intervallweise die Produkte aufnehmen, wobei er zwischen den Intervallen still steht und auf eine nachfolgende Gruppe warten muss. Die dadurch entstehenden Stillstandzeiten des Pickers sowie einer nachgelagerten Tiefziehverpackungsmaschine machen die Herstellung teurer.

Folglich liegt der Erfindung die Aufgabe zugrunde, unter Verwendung einfacher, konstruktiver technischer Merkmale eine Zuführvorrichtung zu schaffen, welche einen Produktionsfluß verbessern kann. Ebenfalls wird ein Verfahren gesucht, mit welchem man die obigen Probleme umgehen kann.

Diese Aufgabe wird gelöst mit den technischen Merkmalen des Anspruchs 1 oder mit den technischen Merkmalen des unabhängigen Anspruchs 10.

Verbesserte Weiterbildungen der Erfindung sind durch die technischen Merkmale der Unteransprüche gegeben.

Die Erfindung bezieht sich auf eine Zuführvorrichtung zum Transport von Produkten, wobei die Produkte in Gruppen der Zuführvorrichtung zur Verfügung gestellt werden. Die Zuführvorrichtung umfasst mindestens ein erstes und ein zweites Förderband, die in einer Transportrichtung hintereinander angeordnet sind, wobei eine erste Gruppe von Produkten von dem ersten Förderband an das zweite Förderband übergebbar ist.

Außerdem ist eine Steuereinheit vorgesehen, die funktionell mit dem ersten und dem zweiten Förderband verbunden ist, wobei die Steuereinheit derart konfiguriert ist, dass sie das erste Förderband unabhängig von dem zweiten Förderband beschleunigen kann sowie deren Beschleunigung und/oder deren Geschwindigkeit synchronisieren kann.

Erfindungsgemäß ist das erste Förderband durch die Steuereinheit beschleunigbar, wenn die erste Gruppe von Produkten an das zweite Förderband übergeben ist und eine weitere, zweite Gruppe von Produkten auf dem ersten Förderband angekommen ist, um eine Lücke zwischen der ersten und der zweiten Gruppe von Produkten zu verringern, so dass nacheinander in verschiedenen Gruppen der Zuführvorrichtung zur Verfügung gestellte Produkte im Wesentlichen äquidistant abführbar sind.

Bei den gruppierten Produkten handelt es sich beispielsweise um Scheiben aufgeschnittenen Käses, aufgeschnittener Wurst oder aufgeschnittenen Fleisches. Die Scheiben sind in der Gruppe hintereinander in einer oder mehreren nebeneinander liegenden Reihen angeordnet. Beispielsweise kann es sich um vierzehn Scheiben Käse handeln, wobei jeweils sieben hintereinander liegende Scheiben in zwei nebeneinander liegenden Reihen angeordnet sind und als Gruppe von der Zuführvorrichtung transportierbar sind.

Ebenso können die gruppierten Produkte der Zuführvorrichtung in Aufnahmeschalen zur Verfügung gestellt werden. Dies wäre beispielsweise dann der Fall, wenn die Produkte durch einen vorangehenden Produktionsschritt jeweils in die Aufnahmeschalen gelegt werden würden.

Durch das Verringern der Lücke zwischen hintereinander transportierten Gruppen ist es möglich, die Produkte im Wesentlichen äquidistant zueinander und/oder mit einem für den Betrieb einer nachgelagerten Vorrichtung günstigen, gegenseitigen Mindestabstand von der Zuführungsvorrichtung abzuführen und an die nachgelagerte Vorrichtung, beispielsweise einen Picker, zu übergeben. Damit kann verhindert werden, dass der Produktionsfluß zeitweise stillsteht, und es ist gewährleistet, dass der Picker kontinuierlich Produkte umsetzt, so dass eine nachfolgende Tiefziehverpackungsmaschine sowie weiter nachfolgende Bearbeitungsstationen wie beispielsweise ein Etikettierer oder eine Waage kontinuierlich arbeiten können.

Vorzugsweise ist das erste Förderband funktionell mit einem Förderband einer Vorschaltmaschine, beispielsweise einer Schneideinrichtung bzw. einem sogenannten Slicer, koppelbar. Dadurch können eingangs dem ersten Förderband die Produktgruppen einfach zur Verfügung gestellt werden.

Vorteilhaft ist es auch, wenn durch die Steuereinheit die Geschwindigkeit des ersten Förderbands mit einer Geschwindigkeit des Förderbands der Vorschaltmaschine derart synchronisierbar ist, dass die Produkte einer jeweiligen Gruppe in einem gleichen Abstand zueinander auf das erste Förderband übergebbar sind. Dies ermöglicht, dass die Produkte mit reduziertem Steuerungs- und Regelungsaufwand einer nachgelagerten Vorrichtung zuführbar sind.

Erfindungsgemäß umfasst die Zuführvorrichtung ein drittes Förderband, das in Transportrichtung gesehen hinter dem zweiten Förderband angeordnet ist, um Produkte vom zweiten Förderband aufzunehmen. Die Zuführvorrichtung ist dadurch noch flexibler einsetzbar, wobei sich die Lücke zwischen nachfolgenden Gruppen noch besser verringern lässt. Gegebenenfalls lässt sich eine weitere Verbesserung mit weiteren Förderbändern erzielen.

Erfindungsgemäß sind das erste und das zweite Förderband durch die Steuereinheit gemeinsam synchron beschleunigbar, wenn, in Transportrichtung gesehen, das letzte Produkt einer jeweiligen Gruppe an das dritte Förderband übergeben ist und eine weitere, nachfolgende Gruppe von Produkten auf zumindest dem ersten Förderband angekommen ist. Dies bedingt den Effekt, dass eine relativ große Gruppe von Produkten, die beispielsweise teils auf dem ersten und teils auf dem zweiten Förderband positioniert ist, beschleunigbar ist, um die Lücke zur vorangehenden Gruppe zu verringern.

Vorzugsweise ist das erste Förderband im Wesentlichen genauso lang wie das zweite und das dritte Förderband zusammen. Vorteilhaft wäre es auch, wenn das erste Förderband so lang ist, dass es zur Aufnahme einer kompletten Gruppe von Produkten geeignet ist. Dadurch kann erreicht werden, dass das zweite Förderband noch öfter unabhängig vom ersten Förderband bewegbar ist.

Eine weitere Ausführung sieht vor, dass das zweite Förderband länger ist als das dritte Förderband. Dies kann insbesondere dann von Vorteil sein, wenn das zweite Förderband stark beschleunigbar sein soll.

Ebenso ist es möglich, dass das erste Förderband jeweils länger als das zweite oder das dritte Förderband ist. Dadurch eignet sich das erste Förderband besonders gut, um eingangs der Zuführvorrichtung die jeweiligen Gruppen von Produkten aufzunehmen.

Um besonders flexibel einsetzbar zu sein, kann eine Länge des ersten, zweiten und/oder dritten Förderbands änderbar sein. Dies bewirkt, dass die Zuführvorrichtung für den erfindungsgemäßen Transport unterschiedlich großer Produktgruppen geeignet ist. Mit der Länge der jeweiligen Förderbänder ist der jeweilige Bandabschnitt gemeint, der eine Förderstrecke des jeweiligen Förderbands definiert.

Für eine positionsgenaue Übergabe der transportierten Produkte an eine nachgelagerte Maschine, beispielsweise eine Verpackungsmaschine, kann die Zuführvorrichtung einen Picker umfassen, der dazu ausgebildet ist, die Produkte von einem dem zweiten oder dritten Förderband nachfolgenden Pickerband aufzunehmen. Anschließend kann dieser die Produkte der Verpackungsmaschine übergeben.

Vorzugsweise ist vorgesehen, dass das erste Förderband taktweise durch die Steuereinheit bewegbar ist. Dabei kann eine taktweise Bewegung des ersten Förderbands unabhängig von einer Bewegung der anderen Förderbänder durch die Steuereinheit durchgeführt werden. Dadurch ist es möglich, eine Bewegung des ersten Förderbands mit einer getakteten Bewegung des Förderbandes der Vorschaltvorrichtung zu synchronisieren. Dies kann insbesondere dann von Vorteil sein, wenn die geschnittenen Scheiben jeweils in Aufnahmeschalen fallen sollen, die durch das Förderband der Aufschneidvorrichtung zur Aufnahme von Produkten bereit gestellt werden.

Die Erfindung betrifft auch ein Verfahren zum Betreiben einer Zuführvorrichtung gemäß einer der vorigen Ausführungsformen, wobei eine erste Gruppe von Produkten auf einem ersten Förderband aufgenommen wird und die erste Gruppe von Produkten mittels des ersten Förderbands an ein nachgeordnetes zweites Förderband übergeben wird. Dabei ist vorgesehen, das erste Förderband, wenn die erste Gruppe von Produkten an das zweite Förderband übergeben ist und eine weitere, nachfolgende zweite Gruppe von Produkten auf dem ersten Förderband aufgenommen ist, zu beschleunigen, um eine Lücke zwischen der ersten und der nachfolgenden, zweiten Gruppe von Produkten zu verringern, so dass die Produkte beider Gruppen im Wesentlichen äquidistant abführbar sind.

Dies bedingt den Effekt, dass der Produktionsfluß ohne wesentliche Unterbrechungen stattfinden kann, weil die Zuführvorrichtung nachgelagerte Vorrichtungen, wie beispielsweise einen Picker, regelmäßig mit Produkten beliefern kann.

Erfindungsgemäß ist vorgesehen, dass das zweite Förderband die Gruppe von Produkten an ein drittes Förderband der Zuführvorrichtung übergibt, das in Transportrichtung hinter dem zweiten Förderband angeordnet ist. Dadurch ist das Verfahren noch flexibler einsetzbar. Schließlich kann dadurch eine Pufferfunktion der Zuführvorrichtung noch besser ausgenutzt werden.

Erfindungsgemäß ist vorgesehen, dass das erste und das zweite Förderband gemeinsam synchron beschleunigen, wenn, in Transportrichtung gesehen, das letzte Produkt einer jeweiligen Gruppe an das dritte Förderband übergeben ist und eine weitere, nachfolgende Gruppe von Produkten auf zumindest dem ersten Förderband angekommen ist. Dadurch kann eine Gruppe von Produkten, die einer vorausgehenden Gruppe nachfolgt, schnell zu dieser aufschließen.

Vorteilhaft ist es auch, vorzusehen, dass das erste, zweite und dritte Förderband gemeinsam synchron beschleunigen, wenn, in Transportrichtung gesehen, das letzte Produkt einer jeweiligen Gruppe von dem dritten Förderband abgeführt ist und eine weitere, nachfolgende Gruppe von Produkten auf zumindest dem ersten Förderband angekommen ist.

Die Erfindung wird anschließend beispielhaft anhand der Figuren 1 bis 3 gezeigt. Dabei zeigen die
- Figur 1: eine schematische Ansicht der Zuführvorrichtung zwischen einer Vorschaltmaschine und einer Pickervorrichtung,
- Figur 2: ein Ablaufschema, durchgeführt von einer nicht erfindungsgemäßen Zuführvorrichtung, und
- Figur 3: ein Ablaufschema, durchgeführt von der erfindungsgemäßen Zuführvorrichtung.

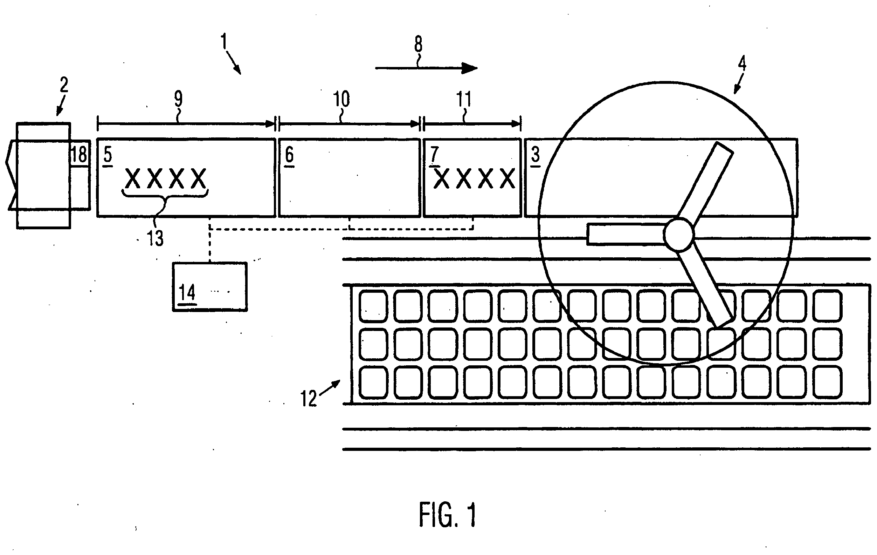

Die Figur 1 zeigt eine Zuführvorrichtung 1, die funktionell zwischen einer Vorschaltmaschine 2 (z.B. einer Aufschneidemaschine für Wurst oder Käse) und einem Pickerband 3 eines Pickers 4 angeordnet ist. Die Zuführvorrichtung 1 umfasst ein erstes, zweites und drittes Förderband 5, 6, 7, die in einer Transportrichtung 8 hintereinander angeordnet sind.

Das erste Förderband 5 umfasst eine Länge, die durch eine erste Förderstrecke 9 definiert ist. Das zweite Förderband 6 umfasst eine Länge, die durch eine zweite Förderstrecke 10 definiert ist. Das dritte Förderband 7 umfasst eine Länge, die durch eine dritte Förderstrecke 11 definiert ist.

Außerdem zeigt die Figur 1 eine Gruppe 13 von Produkten X, die auf dem ersten Förderband 5 liegen. Die Gruppe 13 umfasst vier Produkte X. Eine weitere Gruppe von vier Produkten X liegt auf dem dritten Förderband 7.

In der Figur 1 ist der Picker 4 funktionell vor einer Verpackungsmaschine 12 angeordnet. Der Picker 4 kann vom Pickerband 3, oder alternativ dazu vom dritten Förderband 7, die Produkte aufnehmen und sie der Verpackungsmaschine 12 übergeben.

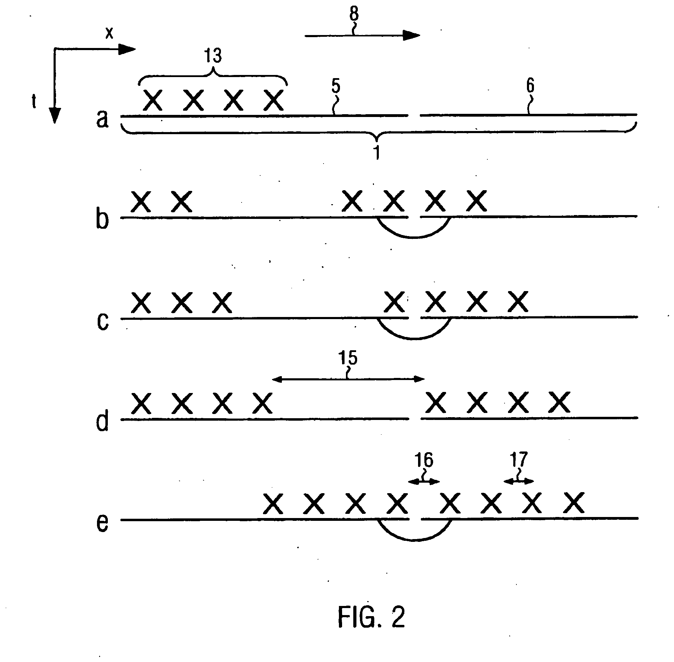

In der Figur 2 ist ein Ablaufschema gezeigt, welches mittels der Zuführvorrichtung 1 durchführbar ist. Dabei werden in vertikaler Richtung zu unterschiedlichen Zeitpunkten t Momentaufnahmen a) bis e) gezeigt. Gemäß dem hiermit erläuterten Beispiel umfasst die Gruppe 13 wie in der Figur 1 vier Produkte X.

Im Gegensatz zur Figur 1 umfasst die schematisch dargestellte Zuführvorrichtung 1 lediglich das erste und das zweite Förderband 5, 6 in den jeweiligen Momentaufnahmen a) bis e).

In a) ist die Gruppe 13 vollständig auf dem ersten Förderband 5 positioniert. Das erste Förderband 5 bewegt sich derart, dass die Gruppe 13 in Transportrichtung 8 zum zweiten Förderband 6 bewegt wird. Damit die Produkte X gleichmäßig zueinander beabstandet bleiben, wenn sie vom ersten Förderband 5 auf das zweite Förderband 6 übergeben werden, ist das zweite Förderband 6 mit gleicher Geschwindigkeit wie das erste Förderband 5 fahrbar. Dies wird durch die Momentaufnahme b) gezeigt.

In b) bewegen sich das erste und das zweite Förderband 5, 6 mit gleicher Geschwindigkeit, sodass die Produkte X im Wesentlichen äquidistant zueinander von dem ersten Förderband 5 an das zweite Förderband 6 übergebbar sind. In b) sind bereits zwei Produkte X an das zweite Förderband 6 übergeben, während zwei Produkte X noch auf dem ersten Förderband 5 sind. Schließlich haben in b) bereits zwei weitere Produkte X einer nachfolgenden Gruppe 13 das erste Förderband eingangs erreicht.

In c) wurde die erste Gruppe 13 beinahe komplett an das zweite Förderband 6 übergeben. Lediglich ein Produkt X ist noch auf dem ersten Förderband 5 zurückgeblieben. Solange dieses noch auf dem ersten Förderband 5 liegt, bewegen sich das erste und das zweite Förderband 5, 6 mit gleicher Geschwindigkeit. Außerdem sind bereits drei Produkte X der nachfolgenden Gruppe 13 auf dem ersten Förderband 5 angekommen.

In d) befindet sich jeweils eine komplette Gruppe 13 von Produkten X auf dem ersten und auf dem zweiten Förderband 5, 6. In dieser Momentaufnahme liegt, in Transportrichtung 8 gesehen, zwischen dem ersten Produkt X der auf dem ersten Förderband 5 befindlichen Gruppe 13 und dem letzten Produkt X der auf dem zweiten Förderband 6 befindlichen Gruppe 13 eine Lücke 15, die es zu verringern gilt, um den Produktionsfluß nicht zu unterbrechen. Daher sind in d) das erste und das zweite Förderband 5, 6 unabhängig voneinander beschleunigbar. Insbesondere kann in dieser Momentaufnahme das erste Förderband 5 so beschleunigt werden, dass die komplette Gruppe 13, die auf dem ersten Förderband 5 vorliegt, zur vorangehenden Gruppe 13, die bereits auf dem zweiten Förderband 6 vorliegt, aufschließt.

In e) ist eine Momentaufnahme gezeigt, in der durch Beschleunigung des ersten Förderbands 5 die darauf vorliegende Gruppe 13 zur vorrausgehenden Gruppe 13 auf dem zweiten Förderband 6 aufgeschlossen hat. Die Lücke 15 wurde dadurch derart verringert, dass zwischen dem ersten Produkt X der auf dem ersten Förderband 5 befindlichen Gruppe 13 und dem letzten Produkt X der auf dem zweiten Förderband 6 befindlichen Gruppe 13 lediglich ein Abstand 16 vorliegt. Der Abstand 16 entspricht im Wesentlichen einem Abstand 17, wie er zwischen den Produkten X einer jeweiligen Gruppe 13 vorliegt.

Die in e) zusammengerückten acht Produkte X können dann nacheinander gleichmäßig von der Zuführvorrichtung 1 abgeführt werden. Dazu werden das erste und das zweite Förderband 5, 6 wieder mit gleicher Geschwindigkeit bewegt. Sobald das letzte Produkt X der zusammengerückten Gruppen 13 dem zweiten Förderband 6 übergeben ist und eine nachfolgende Gruppe 13 auf dem ersten Förderband 5 vorliegt, kann das erste Förderband 5 erneut beschleunigt werden, um die Lücke 15 abermals zu verringern.

Die Momentaufnahmen a) bis e) wurden lediglich exemplarisch herangezogen, um das erfinderische Prinzip der Zuführvorrichtung zu erläutern. Dabei stellen die Momentaufnahmen a) bis e) keinen vollständigen Verfahrensablauf dar.

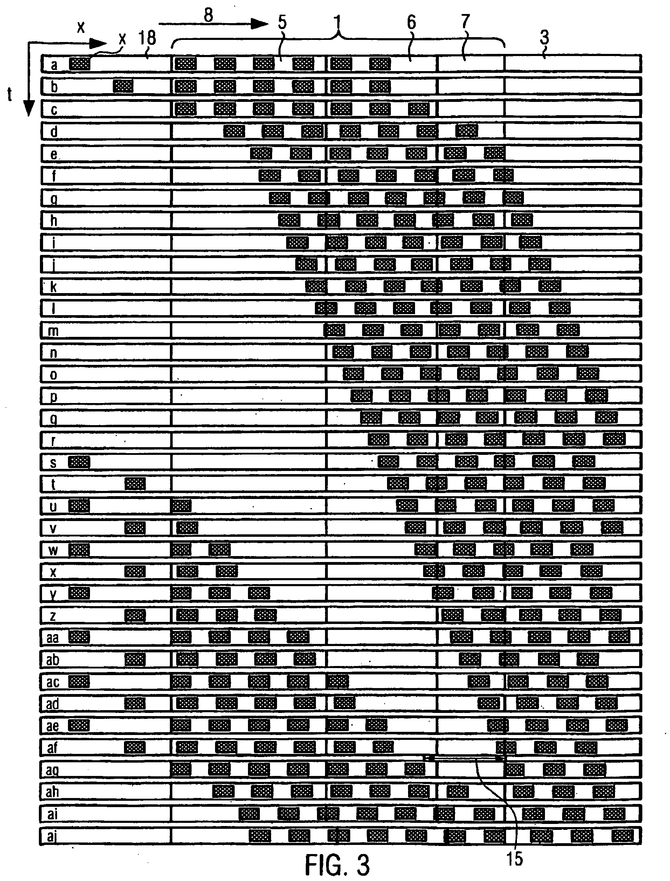

In der Figur 3 ist ein Ablaufschema der erfindungsgemäßen Zuführvorrichtung 1 gezeigt.

Die für das Ablaufschema der Figur 3 verwendete Zuführvorrichtung 1 umfasst das erste, zweite und dritte Förderband 5, 6, 7, die in Transportrichtung 8 hintereinander angeordnet sind. In der Figur 3 werden entlang einer vertikalen Zeitachse t Momentaufnahmen a) bis aj) gezeigt, die im Folgenden zusammengefaßt werden.

Gemäß der Figur 3 umfasst eine Gruppe 13 sieben Produkte X. Innerhalb der Gruppe 13 sind die Produkte X im Wesentlichen in einem gleichen Abstand zueinander angeordnet. Die Produkte X werden hintereinander der Zuführvorrichtung 1 von einem Förderband 18 der Vorschaltmaschine 2 bereitgestellt. Hinter dem dritten Förderband 7 ist das Pickerband 3 vorgesehen, von welchem der Picker 4 (hier nicht gezeigt) die zur Verfügung gestellten Produkte X aufnimmt.

In a) bis c) wird die Gruppe 13 den Förderbändern 5, 6 zugeführt. Dabei ist das erste mit dem zweiten Förderband 5, 6 synchronisiert, sodass sie sich mit gleicher Geschwindigkeit bewegen. Die Bewegung der Förderbänder 5, 6 ist während der Übergabe jedes Produktes X auf das erste Förderband 5 mit dem Förderband 18 der Vorschaltmaschine 2 synchronisiert. Folglich wird sichergestellt, dass das Produkt X bei der Übergabe nicht beschädigt wird. In c) ist die Gruppe 13 vollständig der Zuführvorrichtung 1 übergeben, wobei vier der Produkte X auf dem ersten und drei der Produkte X auf dem zweiten Förderband 5, 6 liegen.

Von c) bis zum Erreichen des Pickerbandes 3 durch das vorderste Produkt X in e) kann die Gruppe der Förderbänder 5, 6, 7 mit beliebiger, vorzugsweise möglichst hoher Geschwindigkeit bewegt werden.

Ab e) wird die Geschwindigkeit der Förderbänder 5, 6, 7 mit der Geschwindigkeit des Pickerbands 3 gleichgesetzt, um die Gruppe 13 dem Pickerband 3 zuzuführen. Jedenfalls bleibt die Geschwindigkeit der Förderbänder 5, 6, 7 bis zur Momentaufnahme n) gleich.

In n) befindet sich kein Produkt X mehr auf dem ersten Förderband 5. Daher ist es möglich, dieses von der Bewegung der anschließenden Förderbänder 6, 7 zu entkoppeln. Das zweite und das dritte Förderband 6, 7 bewegen sich weiterhin mit gleicher Geschwindigkeit fort.

Der Picker 4 kann bereits ab h) Produkte X vom Pickerband 3 abnehmen. Ab s) beginnt der Picker 4 im dargestellten Beispiel tatsächlich, die zur Verfügung gestellten Produkte X vom Pickerband 3 aufzunehmen, um diese einem nachgelagerten Produktionsschritt zu übergeben. Gleichzeitig wird damit begonnen, eine weitere, nachfolgende Gruppe 13 der Zuführvorrichtung 1 eingangs am ersten Förderband 5 zuzuführen. Dies könnte bereits ab Schritt n) beginnen. Bis z) laufen das zweite und das dritte Förderband 6, 7 mit gleicher Geschwindigkeit, weil sich Produkte X sowohl auf dem zweiten, als auch auf dem dritten Förderband 6, 7 befinden.

In z) verbleiben lediglich zwei Produkte X auf dem dritten Förderband 7. Ab diesem Zeitpunkt ist es möglich, das zweite Förderband 6 unterschiedlich schnell wie das dritte Förderband 7 zu bewegen. Während der Momentaufnahmen z), aa) und ab) kann das leere zweite Förderband 6 in einen Ruhemodus abgestellt werden, in dem es beispielsweise stillsteht. Spätestens ab der Momentaufnahme ab) bewegt sich das zweite Förderband 6 gleich schnell wie das erste Förderband 5. Dadurch wird erreicht, dass, während des Übergangs der Produkte X, diese in gleichem Abstand vom ersten Förderband 5 auf das zweite Förderband 6 übersetzten. Die gemeinsame Geschwindigkeit des ersten und des zweiten Förderbands 5, 6 kann so eingestellt werden, dass die nachfolgenden Produkte X vom Förderband 18 der Vorschaltmaschine 2 jeweils in gleichem Abstand zum vorigen Produkt X auf dem ersten Förderband 5 ankommen.

In ag) ist die nachfolgende Gruppe 13 komplett, wobei vier der Produkte X auf dem ersten Förderband 5 und drei der Produkte X auf dem zweiten Förderband 6 liegen. Zu diesem Zeitpunkt wurden bereits vier Produkte X der vorrausgegangenen Gruppe 13 vom Picker 4 abgeholt, wobei das in Transportrichtung 8 gesehene letzte Produkt X der vorrausgehenden Gruppe 13 bereits vom dritten Förderband 7 auf das Pickerband 3 übergeben wurde.

Durch das Ansammeln der nachfolgenden Gruppe 13 auf dem ersten und dem zweiten Förderband 5, 6 und das Abführen der vorausgehenden Gruppe 13 entsteht auch bei dem Ablaufschema der Figur 3 die Lücke 15. Diese Lücke 15, die zwischen dem ersten Produkt X der auf dem ersten und dem zweiten Förderband 5, 6 befindlichen Gruppe 13 und dem letzten Produkt X der auf dem Pickerband 3 verbliebenen Produkte X der vorrausgehenden Gruppe 13 entsteht, gilt es zu verringern, um den Produktionsfluß zu verbessern.

Dazu werden in ah) das erste, zweite und dritte Förderband 5, 6, 7 zusammen beschleunigt, um schließlich ab ai) mit gleicher Geschwindigkeit wie das Pickerband 3 weiter zu fahren. Die Lücke 15 konnte somit zu einem Abstand 16 verringert werden, der im Wesentlichen dem äquidistanten Abstand 17 zwischen den Produkten X innerhalb einer Gruppe 13 entspricht.

Die erfindungsgemäße Zuführvorrichtung 1 kann in sämtlichen Bereichen der Industrie zum Einsatz kommen, ist also nicht auf die zuvor beschriebene Verwendung in der Lebensmittelindustrie begrenzt. Sämtliche Produkte, egal welcher Art, die in nacheinander folgenden beabstandeten Gruppen der Zuführvorrichtung 1 zur Verfügung gestellt werden, können durch die Zuführvorrichtung 1 derart gepuffert werden, dass die Produkte in regelmäßigem Abstand von der Zuführvorrichtung 1 abführbar sind.

## Patentansprüche

1. Zuführvorrichtung (1) zum Transport von Produkten (X), die in Gruppen (13) der Zuführvorrichtung (1) zur Verfügung gestellt werden, umfassend:
mindestens ein erstes und ein zweites Förderband (5, 6), die in einer Transportrichtung (8) hintereinander angeordnet sind, wobei eine erste Gruppe (13) von Produkten (X) von dem ersten Förderband (5) an das zweite Förderband (6) übergebbar ist, und
eine Steuereinheit (14), die funktionell mit dem ersten und dem zweiten Förderband (5, 6) verbunden ist, wobei die Steuereinheit (14) derart konfiguriert ist, dass sie das erste Förderband (5) unabhängig von dem zweiten Förderband (6) beschleunigen kann sowie deren Beschleunigung und/oder deren Geschwindigkeit synchronisieren kann,
wobei das erste Förderband (5) durch die Steuereinheit (14) beschleunigbar ist, wenn die erste Gruppe (13) von Produkten (X) an das zweite Förderband (6) übergeben ist und eine weitere, zweite Gruppe (13) von Produkten (X) auf dem ersten Förderband (5) angekommen ist, um eine Lücke (15) zwischen der ersten und der zweiten Gruppe (13) von Produkten (X) zu verringern, und
wobei die Zuführvorrichtung (1) ein drittes Förderband (7) umfasst, das in Transportrichtung (8) gesehen hinter dem zweiten Förderband (6) angeordnet ist, um die Produkte (X) vom zweiten Förderband (6) aufzunehmen,
**dadurch gekennzeichnet, dass** das erste und das zweite Förderband (5, 6) durch die Steuereinheit (14) gemeinsam synchron beschleunigbar sind, wenn in Transportrichtung (8) gesehen das letzte Produkt (X) einer jeweiligen Gruppe (13) an das dritte Förderband (7) übergeben ist und eine weitere, nachfolgende Gruppe (13) von Produkten (X) auf zumindest dem ersten Förderband (5) angekommen ist.

2. Zuführvorrichtung nach Anspruch 1, **dadurch gekennzeichnet, dass** das erste Förderband funktionell mit einem Förderband (18) einer Vorschaltmaschine (2) koppelbar ist.

3. Zuführvorrichtung nach Anspruch 2, **dadurch gekennzeichnet, dass** durch die Steuereinheit (14) die Geschwindigkeit des ersten Förderbands (5) mit einer Geschwindigkeit des Förderbands (18) der Vorschaltmaschine (2) synchronisierbar ist.

4. Zuführvorrichtung nach einem der vorigen , **dadurch gekennzeichnet, dass** das erste Förderband (5) im Wesentlichen genauso lang ist wie das zweite und das dritte Förderband (6, 7) zusammen.

5. Zuführvorrichtung nach einem der vorigen Ansprüche, **dadurch gekennzeichnet, dass** das zweite Förderband (6) länger ist als das dritte Förderband (7).

6. Zuführvorrichtung nach einem der vorigen Ansprüche, **dadurch gekennzeichnet, dass** das erste Förderband (5) jeweils länger als das zweite oder das dritte Förderband (6, 7) ist.

7. Zuführvorrichtung nach einem der vorigen Ansprüche, **dadurch gekennzeichnet, dass** eine Länge des ersten, zweiten und/oder dritten Förderbands (5, 6, 7) änderbar ist.

8. Zuführvorrichtung nach einem der vorigen Ansprüche, **dadurch gekennzeichnet, dass** die Zuführvorrichtung (1) einen Picker (4) umfasst, der dazu ausgebildet ist, die Produkte (X) vom Pickerband (3) abzuführen.

9. Zuführvorrichtung nach einem der vorigen Ansprüche, **dadurch gekennzeichnet, dass** das erste Förderband (5) taktweise durch die Steuereinheit (14) bewegbar ist.

10. Verfahren zum Betreiben einer Zuführvorrichtung (1) gemäß einem der vorigen Ansprüche, umfassend die folgenden Schritte:
• Aufnehmen einer ersten Gruppe (13) von Produkten (X) auf einem ersten Förderband (5),
• Übergeben der ersten Gruppe (13) von Produkten (X) mittels des ersten Förderbands (5) an ein nachgeordnetes zweites Förderband (6),
• Beschleunigen des ersten Förderbands (5), wenn die erste Gruppe (13) von Produkten (X) an das zweite Förderband (6) übergeben ist und eine weitere, nachfolgende zweite Gruppe (13) von Produkten (X) auf dem ersten Förderband (5) aufgenommen ist, um eine Lücke (15) zwischen der ersten und der nachfolgenden, zweiten Gruppe (13) von Produkten (X) zu verringern.

11. Verfahren nach Anspruch10, **dadurch gekennzeichnet, dass** das zweite Förderband (6) die Gruppe (13) von Produkten (X) an ein drittes Förderband (7) der Zuführvorrichtung (1) übergibt, das in Transportrichtung (8) hinter dem zweiten Förderband (6) angeordnet ist.

12. Verfahren nach Anspruch 11, **dadurch gekennzeichnet, dass** das erste und das zweite Förderband (5, 6) gemeinsam synchron beschleunigen, wenn in Transportrichtung (8) gesehen das letzte Produkt (X) einer jeweiligen Gruppe (13) an das dritte Förderband (7) übergeben ist und eine weitere, nachfolgende Gruppe (13) von Produkten (X) auf zumindest dem ersten Förderband (5) angekommen ist.

13. Verfahren nach Anspruch 12, **dadurch gekennzeichnet, dass** das erste, zweite und dritte Förderband (5, 6, 7) gemeinsam synchron beschleunigen, wenn in Transportrichtung (8) gesehen das letzte Produkt (X) einer jeweiligen Gruppe von dem dritten Förderband (7) abgeführt ist und eine weitere, nachfolgende Gruppe (13) von Produkten (X) auf zumindest dem ersten Förderband (5) angekommen ist.

## Claims

1. Feeding device (1) for transporting products (X) which are provided to the feeding device (1) in groups, comprising:
at least one first and one second conveyor belts (5, 6) which are arranged in the direction of transport (8) one behind the other, wherein a first group (13) of products (X) can be transferred from the first conveyor belt (5) to the second conveyor belt (6), and
a control unit (14) which is functionally connected with the first and the second conveyor belts (5, 6), wherein the control unit (14) is configured such that it can accelerate the first conveyor belt (5) independently of the second conveyor belt (6) and can synchronize its acceleration and/or speed,
wherein the first conveyor belt (5) can be accelerated by the control unit (14) when the first group (13) of products (X) has been transferred to the second conveyor belt (6), and a further, second group (13) of products (X) has arrived on the first conveyor belt (5) to reduce a gap (15) between the first and the second groups (13) of products (X), and
wherein the feeding device (1) comprises a third conveyor belt (7) which is disposed behind the second conveyor belt (6), seen in the direction of transport (8), to receive the products (X) from the second conveyor belt (6), **characterized in that** the first and the second conveyor belts (5, 6) can be synchronously accelerated together by the control unit (14) when the last product (X) of a respective group (13), seen in the direction of transport (8), has been transferred to the third conveyor belt (7) and a further, subsequent group (13) of products (X) has arrived at least on the first conveyor belt (5).

2. Feeding device according to claim 1, **characterized in that** the first conveyor belt can be functionally coupled to a conveyor belt (18) of a preceding machine (2).

3. Feeding device according to claim 2, **characterized in that** the control unit (14) can synchronize the speed of the first conveyor belt (5) with a speed of the conveyor belt (18) of the preceding machine (2).

4. Feeding device according to one of the preceding claims, **characterized in that** the first conveyor belt (5) is essentially as long as the second and the third conveyor belts (6, 7) together.

5. Feeding device according to one of the preceding claims, **characterized in that** the second conveyor belt (6) is longer than the third conveyor belt (7).

6. Feeding device according to one of the preceding claims, **characterized in that** the first conveyor belt (5) is longer each than the second or the third conveyor belt (6, 7).

7. Feeding device according to one of the preceding claims, **characterized in that** a length of the first, second and/or third conveyor belt (5, 6, 7) is variable.

8. Feeding device according to one of the preceding claims, **characterized in that** the feeding device (1) comprises a picker (4) which is designed to discharge the products (X) from the picker belt (3).

9. Feeding device according to one of the preceding claims, **characterized in that** the first conveyor belt (5) can be intermittently moved by the control unit (14).

10. Method of operating a feeding device (1) according to one of the preceding claims, comprising the following steps:
o receiving a first group (13) of products (X) on a first conveyor belt (5),
o transferring the first group (13) of products (X) to a subsequent second conveyor belt (6) by means of the first conveyor belt (5),
o accelerating the first conveyor belt (5) when the first group (13) of products (X) has been transferred to the second conveyor belt (6), and a further, subsequent second group (13) of products (X) has been received on the first conveyor belt (5) to reduce a gap (15) between the first and the subsequent, second group (13) of products (X).

11. Method according to claim 10, **characterized in that** the second conveyor belt (6) transfers the group (13) of products (X) to a third conveyor belt (7) of the feeding device (1) which is disposed behind the second conveyor belt (6) in the direction of transport (8).

12. Method according to claim 11, **characterized in that** the first and the second conveyor belts (5, 6) synchronously accelerate together when the last product (X) of a respective group (13), seen in the direction of transport (8), has been transferred to the third conveyor belt (7), and a further, subsequent group (13) of products (X) has arrived at least on the first conveyor belt (5).

13. Method according to claim 12, **characterized in that** the first, the second and the third conveyor belts (5, 6, 7) synchronously accelerate together when the last product (X) of a respective group (13), seen in the direction of transport (8), has been discharged by the third conveyor belt (7), and a further, subsequent group (13) of products (X) has arrived at least on the first conveyor belt (5).

## Revendications

1. Dispositif d'approvisionnement (1) pour le transport de produits (X), qui sont fournis au dispositif d'approvisionnement (1) en groupes (13), comprenant :
au moins une première et une deuxième bande de transport (5, 6), qui sont agencées l'une à la suite de l'autre dans une direction de transport (8), un premier groupe (13) de produits (X) pouvant être transféré de la première bande de transport (5) à la deuxième bande de transport (6), et
une unité de commande (14), qui est reliée, sur le plan fonctionnel, à la première et à la deuxième bande de transport (5, 6), l'unité de commande (14) étant configurée de manière à pouvoir accélérer la première bande de transport (5) indépendamment de la deuxième bande de transport (6), et à pouvoir synchroniser leur accélération et/ou leur vitesse, et
la première bande de transport (5) pouvant être accélérée par l'unité de commande (14), lorsque le premier groupe (13) de produits (X) a été transféré à la deuxième bande de transport (6), et qu'un autre, deuxième groupe (13) de produits (X) est arrivé sur la première bande de transport (5), en vue de réduire un espacement libre (15) entre le premier et le deuxième groupe (13) de produits (X), et
le dispositif d'approvisionnement (1) comprend une troisième bande de transport (7) qui, vu dans la direction de transport (8), est agencée après la deuxième bande de transport (6), en vue de recevoir les produits (X) de la deuxième bande de transport (6), **caractérisé en ce que** la première et la deuxième bande de transport (5, 6) peuvent être accélérées en commun de manière synchrone par l'unité de commande (14), lorsque, vu dans la direction de transport (8), le dernier produit (X) d'un groupe (13) respectif considéré a été transféré à la troisième bande de transport (7), et qu'un autre groupe suivant (13) de produits (X) est arrivé au moins sur la première bande de transport (5).

2. Dispositif d'approvisionnement selon la revendication 1, **caractérisé en ce que** la première bande de transport peut être couplée sur le plan fonctionnel à une bande de transport (18) d'une machine en amont (2).

3. Dispositif d'approvisionnement selon la revendication 2, **caractérisé en ce que** par l'intermédiaire de l'unité de commande (14), la vitesse de la première bande de transport (5) peut être synchronisée avec une vitesse de la bande de transport (18) de la machine en amont (2).

4. Dispositif d'approvisionnement selon l'une des revendications précédentes, **caractérisé en ce que** la première bande de transport (5) est sensiblement exactement de même longueur que la deuxième et la troisième bande de transport (6, 7) réunies.

5. Dispositif d'approvisionnement selon l'une des revendications précédentes, **caractérisé en ce que** la deuxième bande de transport (6) est plus longue que la troisième bande de transport (7).

6. Dispositif d'approvisionnement selon l'une des revendications précédentes, **caractérisé en ce que** la première bande de transport (5) est plus longue respectivement que la deuxième ou la troisième bande de transport (6, 7).

7. Dispositif d'approvisionnement selon l'une des revendications précédentes, **caractérisé en ce qu'**une longueur de la première, deuxième et/ou troisième bande de transport (5, 6, 7) peut être modifiée.

8. Dispositif d'approvisionnement selon l'une des revendications précédentes, **caractérisé en ce que** le dispositif d'approvisionnement (1) comprend un organe de prélèvement (4) qui est conçu pour évacuer les produits (X) de la bande de prélèvement (3).

9. Dispositif d'approvisionnement selon l'une des revendications précédentes, **caractérisé en ce que** la première bande de transport (5) peut être déplacée de manière cyclique par l'unité de commande (14).

10. Procédé pour faire fonctionner un dispositif d'approvisionnement (1) selon l'une des revendications précédentes, comprenant les étapes suivantes :
• réception d'un premier groupe (13) de produits (X) sur une première bande de transport (5),
• transfert du premier groupe (13) de produits (X), au moyen de la première bande de transport (5), à une deuxième bande de transport (6) placée en aval,
• accélération de la première bande de transport (5) lorsque le premier groupe (13) de produits (X) a été transféré à la deuxième bande de transport (6), et qu'un autre, deuxième, groupe suivant (13) de produits (X) a été reçu sur la première bande de transport (5), en vue de réduire un espacement libre (15) entre le premier et le deuxième groupe suivant (13) de produits (X).

11. Procédé selon la revendication 10, **caractérisé en ce que** la deuxième bande de transport (6) transfère le groupe (13) de produits (X) à une troisième bande de transport (7) du dispositif d'approvisionnement (1), qui, dans la direction de transport (8), est agencée après la deuxième bande de transport (6).

12. Procédé selon la revendication 11, **caractérisé en ce que** la première et la deuxième bande de transport (5, 6) accélèrent en commun, de manière synchrone, lorsque, vu dans la direction de transport (8), le dernier produit (X) d'un groupe (13) respectif considéré a été transféré à la troisième bande de transport (7), et qu'un autre groupe suivant (13) de produits (X) est arrivé au moins sur la première bande de transport (5).

13. Procédé selon la revendication 12, **caractérisé en ce que** la première, la deuxième et la troisième bande de transport (5, 6, 7) accélèrent en commun, de manière synchrone, lorsque, vu dans la direction de transport (8), le dernier produit (X) d'un groupe respectif considéré a été évacué de la troisième bande de transport (7), et qu'un autre groupe suivant (13) de produits (X) est arrivé au moins sur la première bande de transport (5).
